# EUROPEAN PATENT SPECIFICATION

(11) **EP 2 630 017 B1**
(45) Date of publication and mention of the grant of the patent: **16.03.2016**
(21) Application number: 11834912.5
(22) Date of filing: 14.10.2011
(51) Int. Cl.: B60T 8/42

(54) **AIRCRAFT BRAKE HANDLE ASSEMBLY**
GRIFFANORDNUNG FÜR FLUGZEUGBREMSEN
ENSEMBLE MANETTE DE FREIN D'AÉRONEF

(30) Priority: 18.10.2010 US 394249 P
(43) Date of publication of application: 28.08.2013
(73) Proprietor: Honda Patents & Technologies North America, LLC, Torrance, CA 90501 (US)
(72) Inventor: OYAMA, Hiroki, Raymond, Ohio 43067-9705 (US); TADA, Katsutoshi, Raymond, OH 43067-9705 (US); O'CONNELL, Charles, Raymond, OH 43067-9705 (US)
(74) Representative: Weickmann & Weickmann
(86) International application number: PCT/US2011/056484
(87) International publication number: WO 2012/054361

(56) References cited:
- DE-U1-202008 005 984
- GB-A- 502 647
- GB-A- 502 647
- US-A- 3 127 131
- US-A- 3 127 131
- US-A- 3 881 783
- US-A- 6 085 608
- US-A1- 2007 137 405

## Description

This application claims the benefit of U.S. Provisional patent application Serial No. 61/394,249, filed October 18, 2010.

### BACKGROUND

The present disclosure generally relates to aircraft braking systems, and more particularly relates to a brake handle assembly for an aircraft emergency/parking brake.

A brake handle assembly according to the preamble of claim 1 is known from GB 502 647 A and US 6,085,608 A.

Many types of aircraft, including small business jets, use power braking systems as the primary braking means for the aircraft. To deal with an unexpected failure of the power braking system, a non-powered redundant braking system is typically provided. One such redundant braking system includes a modulating emergency/parking brake valve in combination with an accumulated power device. The brake valve can direct a pressurized fluid (e.g., hydraulic or brake fluid, compressed air, etc.) from the accumulator to apply the aircraft's brakes when the primary braking system fails. In addition to providing emergency brakes, the brake valve can also fully engage the brakes for long term parking.

Typically a control lever or other activated mechanism in the cockpit is mechanically connected to the brake valve to control the flow of pressurized fluid in the aircraft's hydraulic system to and from the brake cylinders at the wheels of the aircraft. In particular, an amount of braking pressure applied by the brake valve can correspond to the position of the control lever, which is operated by the pilot. Unfortunately, it can be difficult to precisely control applied brake pressure and supply appropriate aircraft deceleration using the control lever without causing wheel lock. Wheel lock is undesirable in that it can lead to a potential burst tire.

It is an object of the present invention to provide a brake handle assembly for an aircraft emergency/parking brake which is able to prevent wheel lock and tire burst during brake application.

### SUMMARY

This object is achieved by a brake handle assembly for an aircraft emergency/parking brake according to claim 1. The brake handle assembly for an aircraft emergency/parking brake includes a handle movable between a non-actuated position wherein the brake is disengaged and a full actuated position wherein, during movement therebetween, the brake applies a modulated braking force in an emergency brake state. A button actuator is disposed on the handle and movable relative to the handle, wherein movement of the handle from an intermediate stop position to the full actuated position is obstructed to prevent inadvertent operation of the brake in the parking brake state unless the button actuator is depressed.

### BRIEF DESCRIPTION OF THE DRAWINGS

FIG. 1 is a partial perspective view of an aircraft emergency/parking brake system showing a brake handle assembly disposed in an aircraft cockpit area and mechanically connected to a forwardly disposed brake valve.
FIG. 2 is a schematic system diagram illustrating the aircraft emergency/parking brake system.
FIG. 3 is a cross-sectional view of the brake handle assembly shown removed from the cockpit area.
FIG. 4 is a cross-sectional view of the brake handle assembly taken along the line 4-4 of FIG. 3.
FIG. 5 is a cross-sectional view taken along the line 5-5 of FIG. 3.
FIG. 6 is an elevational view of a guide track link of the brake handle assembly.
FIG. 7 is an elevational view of a handle link of the brake handle assembly.
FIG. 8 is a button link of the brake handle assembly.
FIG. 9 is a schematic elevational view of the brake handle assembly shown in a non-actuated position.
FIG. 9A is a cross-sectional view of the brake handle assembly of FIG. 9.
FIG. 10 is a schematic elevational view of the brake handle assembly shown in an intermediate stop position before a button actuator is depressed.
FIG. 10A is a cross-sectional view of the brake handle assembly of FIG. 10.
FIG. 11 is a schematic elevational view of the brake handle assembly shown in the intermediate stop position shown with the button actuator depressed.
FIG. 11A is a cross-sectional view of the brake handle assembly of FIG. 11.
FIG. 12 is a schematic elevational view of the brake handle assembly shown in a full actuated position.
FIG. 12A is a cross-sectional view of the brake handle assembly of FIG. 12.
FIG. 13 is a schematic elevational view of the brake handle assembly shown locked in the full actuated position.
FIG. 13A is a cross-sectional view of the brake handle assembly of FIG. 13.

### DETAILED DESCRIPTION

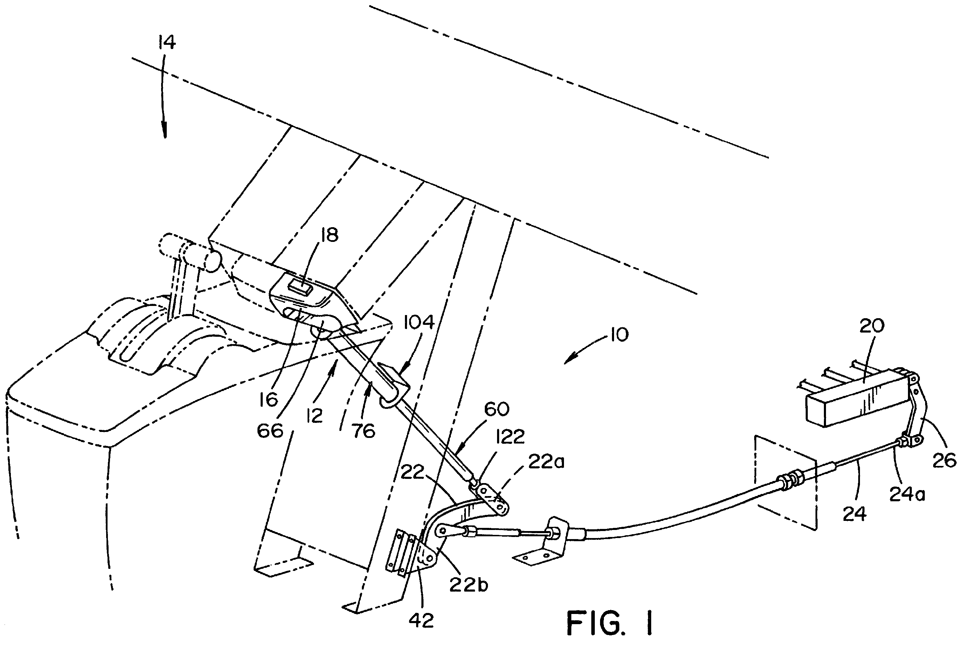

Referring now to the drawings wherein the showings are only for purposes of illustrating one or more exemplary embodiments and not for purposes of limiting same, FIG. 1 illustrates an aircraft emergency/parking brake system 10 having a brake handle assembly 12 disposed in a cockpit area 14 of an aircraft. In the illustrated embodiment, the brake handle assembly 12 includes a handle 16 provided for selectively applying a modulated emergency braking force in an emergency brake state and a locked or fully engaged braking force in a parking brake state. The handle assembly 12 further includes a button actuator 18 disposed on the handle 16 for enabling the handle to be moved so as to change actuation of the modulated braking force in the emergency brake state to the locked/fully engaged braking force in the parking brake state. As will be described in more detail below, the handle 16 of the illustrated embodiment is mechanically connected to an emergency/parking brake valve 20 by a pivotal link 22 and a push-pull cable 24.

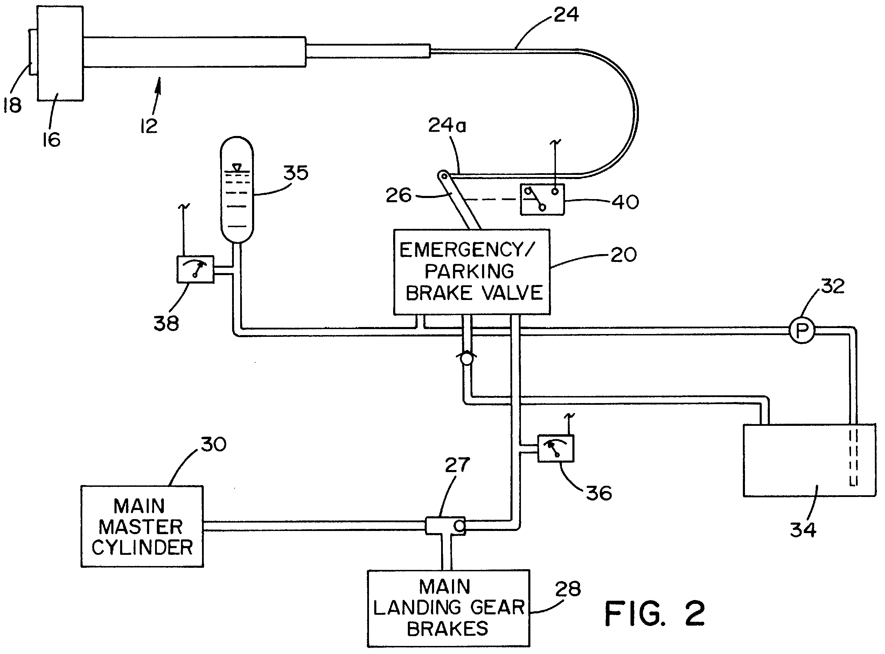

The brake handle assembly 12 has two stages (i.e., the emergency brake state and the parking brake state). In the first stage, the emergency brake state, a modulated braking force can be applied without wheel lock and such modulated braking force can be precisely controlled to prevent tire burst. The second stage, the parking brake state, is a full brake pressure application for parking and/or maximum brake force. With additional reference to FIG. 2, the brake handle 16 is again shown mechanically connected to the brake valve 20 by the cable 24 (the pivotal link 22 is not shown). In particular, one end 24a of the cable 24 connects to a movable lever 26 of the brake valve 20 for operation of the brake valve. The brake valve 20 controls a fluid force (e.g., a hydraulic fluid force) applied to the main landing gear brakes 28. Such braking force to the main landing gear brakes 28 is supplemental to the fluid force applied by the aircraft's primary braking system, which can be controlled by a main master cylinder 30. In particular, a fluid component 27 can route or control pressurized fluid to the brakes 28 (e.g., the component 27 can include a check valve that normally closes fluid communication between the valve 20 and the brakes 28 when the master cylinder 30 is providing fluid pressure, but allows such communication when the master cylinder is providing insufficient fluid pressure).

More particularly, the handle 16 is mechanically connected to the emergency/parking brake valve 20 so that the position of the handle 16 is mechanically communicated to the valve 20. In particular, the handle 16 is mechanically connected to the brake valve 20 by the push/pull cable 24 that transmits pushing and pulling action of the handle 16 to the valve 20, and particularly to the lever 26 of the valve 20. The handle 16 is further mechanically connected to the brake valve 20 by the pivotal link 22. The pivotal link 22 has one end 22a connected to the handle 16 for linear movement therewith and a second end 22b connected to the push/pull cable 24 for linear movement therewith. The pivotal link 22 is pivotally connected to a fixed mounting 42 so that pulling movement of the handle 16 is translated to pulling action of the push/pull cable 24 and pushing action on the handle 16 is translated to pushing action of the push/pull cable 24.

Fluid pressure controlled by the brake valve 20 can be supplied by a pump 32 fluidly connected to a fluid reservoir 34. Fluid pressure to the brake valve 20 can also be supplied by an accumulator 35, which can be relied upon in the condition that the pump 32 fails (e.g., loses power). As is known and understood by those skilled in the art, fluid pressure gauges 36, 38 can be provided, such as first fluid pressure gauge 36 between the brake valve 20 and the main landing gear brakes 28 to measure fluid pressure delivered to the main landing gear brakes 28 and second fluid pressure gauge 38 fluidly disposed between the pump 32 and the accumulator 35 for measuring a fluid pressure from the pump 32 and/or the accumulator 35. An electrical switch 40 can also be provided as shown operatively connected to the brake valve lever 26 for switching between an off position when the brake lever 26 is in a non-actuated position corresponding to a non-actuated position of the brake handle 16 and an on position when the brake lever 26 is in any other position corresponding to the brake handle 16 being in any other position than the non-actuated position. The switch 40 can be used, for example, for illuminating an indicator (not shown) in the cockpit 14 to indicate that emergency and/or parking braking is being applied by the brake valve 20.

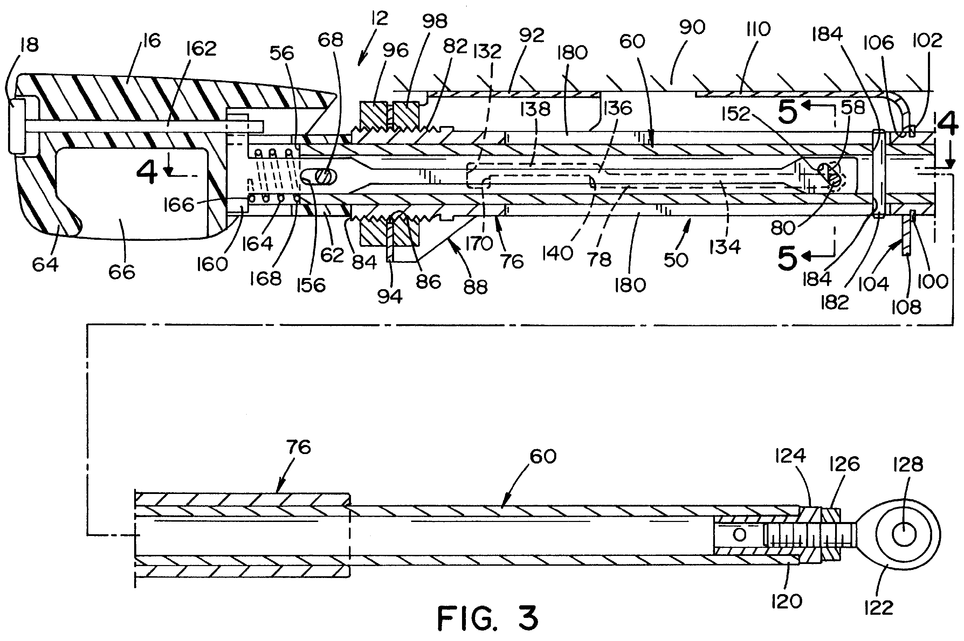

With reference to FIGS. 3-5, the brake handle 16 is shown in the non-actuated position. The handle 16 is longitudinally movable in a first direction (to the left in FIG. 3) from the illustrated non-actuated position to an intermediate stop position for applying a modulated emergency braking force. Movement of the handle 16 in the first direction beyond the intermediate stop position is prevented by an obstructing assembly 50. Accordingly, the handle 16 is freely movable from the non-actuated position to the intermediate stop position wherein during movement there between the brake 28 applies a modulated braking force in the emergency brake state.

The button actuator 18 disposed on the handle 16 is operatively connected to the obstructing assembly 50. Actuation of the button actuator 18, as will be described in more detail below, disengages the obstructing assembly 50 to allow movement of the handle 16 in the first direction from the intermediate stop position to a full actuated position for applying the brake 28 as a parking brake (i.e., full application of the braking force from the brake is applied) in a parking brake state. By this arrangement, the handle 16 is movable between the non-actuated position wherein the brake is disengaged and the full actuated position wherein the brake is fully engaged in the parking brake state, though movement of the handle 16 from the intermediate stop position to the full actuated position is obstructed to prevent inadvertent operation of the brakes 20 in the parking brake state unless the button actuator 18 is depressed (i.e., the button actuator 18 communicating the pilot's intention to activate the parking brake).

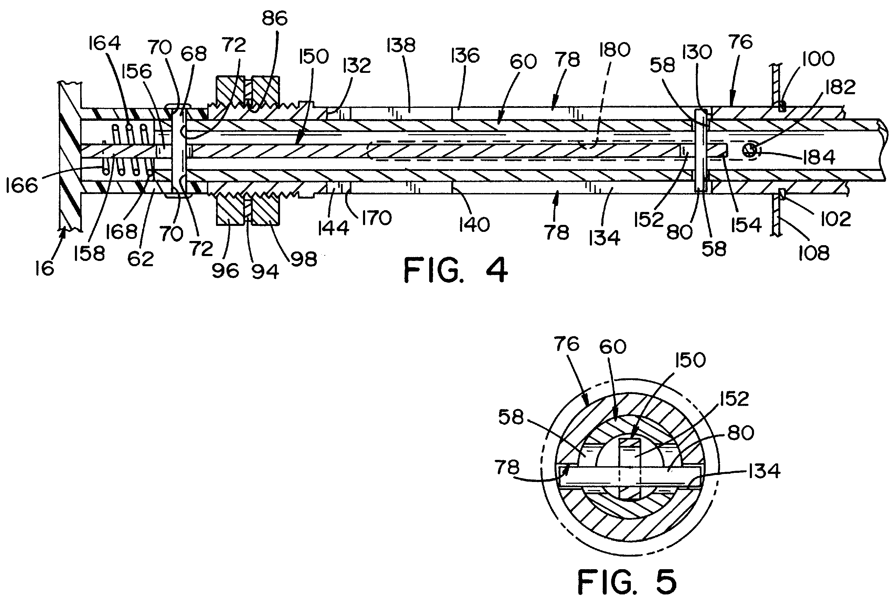

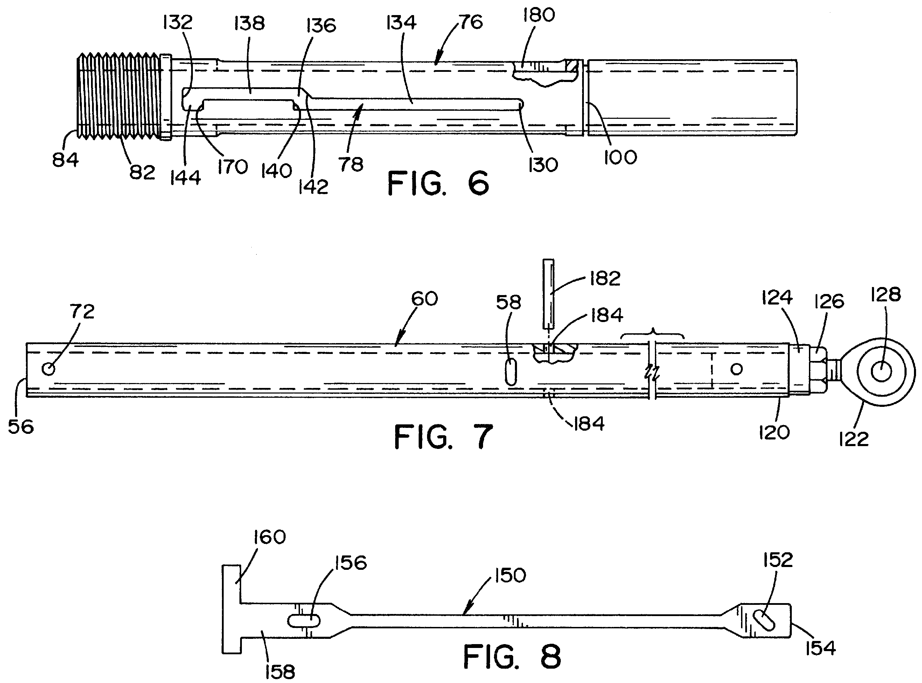

The brake handle assembly 12 includes a handle link 60 (shown in isolation in FIG. 7) connected to the handle 16. The handle link 60 longitudinally moves with the handle 16 as the handle is moved between the non-actuated position and the fully engaged position and to any position between the non-actuated position and the fully engaged position, including the intermediate stop position. In the illustrated embodiment, the handle link 60 is tube-shaped and has a first end 56 received within a tubular portion 62 of the handle 16 and fixedly secured thereto. The handle 16 includes a gripping portion 64 disposed adjacent an underside recess 66 which enables a pilot to easily manipulate the handle 16 for longitudinal movement thereof along with longitudinal movement of the handle link 60. As best shown in FIG. 4, a rivet-type pin 68 can fixedly secure the handle link 60 to the handle 16, and particularly the tubular portion 62 of the handle 16. Accordingly, the pin 68 can be received through apertures 70 defined in the tubular portion 62 and through apertures 72 (one shown in FIG. 7), which are in registry with the apertures 70. A distal end 120 of the handle link 60 can be secured to the pivotal link 22 via an attaching member 122. As shown, the attaching member 122 is secured to the distal end 120 by mounting members 124, 126 and includes an aperture 128 for connecting the attaching member 122 to the pivotal link 22 via a suitable fastener (not shown).

The brake handle assembly 12 further includes a guide track link 76 (shown in isolation in FIG. 6) having a guide track 78 defined therein and mounted to allow relative movement of the handle link 60 therealong as the handle 16 is moved (i.e., the handle 16 and the handle link 60 are movable relative to the guide track member 76 and the guide track 78). In particular, the guide track link 76 can be tubular and can receive the handle link 60 therein in telescoping relation. The obstructing assembly 50 can comprise a pin 80 received in the guide track 78 and configured for non-relative longitudinal movement with the handle 16. More particularly, the pin 80 can be connected to the handle link 60, such as by receipt through the slots 58, and thereby to the handle 16 for longitudinal movement with the handle link 60 and the handle 16 such that the pin 80 moves longitudinally along the guide track 78 as the handle 16 is moved. In the illustrated embodiment, the guide track 78 is a pair of guide tracks defined along diametrically opposed portions of the guide link 76. Thus, the pin 80 is received in the guide tracks 78 and configured to move along the guide tracks 78 as the handle 16 is moved between the non-actuated position and the intermediate position, and between the intermediate position and the full actuated position.

In the illustrated embodiment, the guide track link 76 is fixedly mounted in the cockpit area 14 of the aircraft. For such mounting, the guide track link 76 can have a threaded region 82 disposed adjacent a first end 84 of the guide track link 76. The threaded region 82 can be received through an aperture 86 defined in a mounting bracket 88 which is fixedly secured to a static structure 90 provided in the cockpit area 14. For example, the bracket 88 can have a mounting portion 92 welded to the static structure 90, which can be a body portion of the aircraft. In particular, the aperture 86 can be defined in a flange portion 94 of the bracket 88. A pair of threaded members 96, 98 can be threadedly engaged with the guide track link 76 along the threaded region 82 for fixedly securing the guide track link 76 to the bracket 88, and in turn to the static structure 90 within the aircraft.

Spaced apart from the threaded region 82 on an opposite side of the guide track 78, the guide track link 76 can include a circumferential groove 100. The groove 100 can receive a lock ring 102 which seats against a bracket 104. The bracket 104 can include an aperture 106 through which the guide track link 76 is received, the aperture 106 being defined in a flange portion 108 of the bracket 104. A mounting portion 110 of the bracket 104 can be fixedly secured to the static structure 90 in the same manner as described in reference to the mounting portion 92 of the bracket 88 (e.g., welding). By this arrangement, the guide track link 76 is non-movably mounted to the static structure 90, whereas the handle link 60 and the handle 16 connected thereto for longitudinal movement therewith are movably mounted to the static structure 90 within the guide track link 76.

As best shown in FIG. 6, each guide track 78 of the illustrated guide track link 76 includes a first end 130 corresponding to the non-actuated position of the handle 16 and a second end 132 corresponding to the full actuated position of the handle 16. Each guide track 78 further includes a first longitudinal section 134 extending longitudinally from the first end 130 to an intermediate location 136 corresponding to the intermediate stop position, and a second longitudinal section 138 extending from the second end 132 to the intermediate location 136. As shown, the second longitudinal section 138 is offset laterally (about a circumference of the guide track link 76) relative or from the first longitudinal section 134.

The first longitudinal section 134 terminates at a shoulder 140 defined in the guide track 78 at the intermediate location 136. Accordingly, the first end of the first longitudinal section 134 is the first end 130 of the guide track 78 and the second end of the first longitudinal section 134 is the shoulder 140. The shoulder 140 obstructs longitudinal movement of the pin 80 along the first longitudinal section 134 beyond the intermediate location 136, and the pin 80 accordingly obstructs movement of the handle 16 beyond the intermediate stop position when the handle 16 is moved between the non-actuated position and the intermediate stop position. Accordingly, the obstructing assembly 50 can be considered as further including the guide tracks 78 and particularly the shoulders 140 thereof (i.e., the shoulders 140 prevent continuous longitudinal movement toward and past the intermediate stop position). In particular, cooperation between the pin 80 and the guide tracks 78 prevent continued longitudinal movement of the pin 80 to prevent corresponding movement of the handle from the intermediate stop position to the full actuated position.

Laterally or circumferentially adjacent the shoulder 140 at the intermediate stop position 136 is a tapered portion 142, which facilitates movement of the pin from the second longitudinal portion 138 back to the first longitudinal portion 134. Accordingly, the first end of the second longitudinal slot section 138 is the tapered portion 142 and the second end of the second longitudinal section is the second end 132 of the guide track 78. As will be described in more detail below, the pin 80 is movable laterally or rotatably from the first section 134 to the second section 138 at the intermediate stop position when the button actuator 18 is actuated. The pin 80 also moves laterally or rotatably in the slots 58 of the handle link 60. Thus, the button actuator 18 is configured to laterally or rotatably move the pin 80 in the guide tracks 78 and in the slots 58 when the handle 16 is at the intermediate stop position in the first longitudinal section 134 to allow further longitudinal movement of the pin 80 in the guide tracks 78 in the second longitudinal section 138 and corresponding movement of the handle 16 from the intermediate stop position to the full actuated position when the button actuator 18 is actuated.

Each guide track 78 further includes a locking recess section 144 at the second end 132 thereof that is laterally or circumferentially offset from the second longitudinal section 138. In particular, in the illustrated embodiment, the locking recess section 144 is laterally or circumferentially offset from the second longitudinal section 138 in the same direction as the first longitudinal section 134 is laterally or circumferentially offset from the second longitudinal section 138. As will be described in more detail below, the pin 80 can be moved laterally or rotatably from the second longitudinal section 138 to the locking recess section when at the second end 132 of the guide track 78 and the button actuator 18 is released. Cooperation between the pin 80 and the guide track 78 can then prevent longitudinal movement of the pin 80 to prevent corresponding movement of the handle 16 from the full actuated position to the intermediate stop position; however, actuation of the button actuator 18 to laterally or rotatably move the pin 80 in the guide track 78 (i.e., from the locking recess section 144 back to the second longitudinal section 138) allows longitudinal movement of the pin 80 and corresponding movement of the handle 16 from the full actuated position to the intermediate position.

The handle link 60 can further include at least one laterally extending slot 58 defined therein. In the illustrated embodiment, two diametrically opposed slots 58 are defined in the handle link 60 and each receives a respective end of the pin 80. The slots 58 guide lateral movement of the pin 80 (e.g., from the first longitudinal section 134 to the second longitudinal section 138). As shown in phantom in FIG. 5 5, a cover can be annular disposed around the handle assembly 12 and this cover can maintain the pin 80 within the assembly (i.e., prevents the pin from sliding along its axis).

The brake handle assembly 12 can further include a button link 150 (shown in isolation in FIG. 8) that is connected to the button actuator 18 for movement therewith. The button link 150 defines an angled slot 152 adjacent a first or inner end 154. As shown, the button link 150 of the illustrated embodiment has a generally flat, elongated configuration. The pin 80 is received through the angled slot 152. Depression of the button actuator 18 when the pin 80 is at the intermediate location 136 in the first longitudinal section 134 moves the pin 80 laterally or rotatably to the second intermediate section 138. The guide track 78 and the angled slot 152 are together configured to prevent lateral or rotatably movement of the pin 80 from the first longitudinal section 134 to the second longitudinal section 138 at the intermediate location 136 until the button actuator 18 is depressed. When the button actuator 18 is depressed, the button link 150 moves longitudinally and the angled slot 152 laterally or rotatably moves the pin 80 from the first longitudinal section 134 to the second longitudinal section (i.e., the pin 80 is moved so that the shoulder 140 is no longer an obstacle). Once in the second longitudinal section 138, the pin 80 is free to move longitudinally along the second longitudinal section and the handle link 60 and handle 16 are free to move from the intermediate stop position to the full actuated position.

As shown, the button link 150 can also include a second slot 156 that is longitudinally extending adjacent a first or outer end 158 of the button link 150. The pin 68 is received through the slot 156 for guiding longitudinal movement of the button link 150. A flange portion 160 can also be disposed adjacent the outer end 158 for connecting to a shaft portion 162 of the button actuator 18. A spring 164 can be annularly disposed about the outer end 158 of the button link 150. The spring 164 can have a first end 166 that acts against the flange portion 160 of the button link 150 and a second end 168 that acts against the end 56 of the handle link 60. By this arrangement, the spring 164 urges the button actuator 18 and thus the button link 158 connected thereto to a non-actuated position.

As best shown in FIG. 3, when the button actuator 18 is in the non-actuated or undepressed position, the angled slot 152 cooperates with the shoulder 140 to prevent lateral movement of the pin 80 and thereby limits movement of the button link 60 relative to the guide track link 76 beyond the intermediate stop position. Accordingly, movement of the handle 16 from the intermediate stop position to the full actuated position is obstructed. As will be described in more detail below, when the button actuator 18 is depressed, the button link 150 moves longitudinally and allows or forces movement of the pin laterally/rotatably from the first longitudinal section 134 to the section longitudinal section 138, which in turn allows movement of the pin 80 beyond the shoulder 140 from the intermediate location in the guide track 78 to the second end 132 of the guide track 78. This accordingly allows movement of the handle 16 from the intermediate stop position to the full actuated position.

At the second end 132 of the guide track 78, the pin 80 can move into the locking recess section 144 from the second section 138 when the pin 80 is at or adjacent the second end 132 of the second section 138 and the button actuator 18 is released and returned to its non-actuated position. In particular, when the button actuator 18 is released, the button link 150 returns to its nonactuated position as urged by the spring 164 and the angled slot 152 moves the pin 80 laterally into the locking recess section 144. When the button actuator 18 is in its non-actuated position, lateral movement of the pin 80 from the locking recess section 144 back to the second longitudinal section 138 is prevented by the configuration of the locking recess section 144, and particularly due to shoulder 170 defining the recess section 144. Accordingly, movement of the handle 16 from the full actuated position toward the non-actuated position, including toward the intermediate stop position, is obstructed unless the button actuator 18 is depressed.

Forward of the pin 80, another pin 180 can connect the handle link 60 and the guide track link 76. In particular, the pin 180 can be received through apertures 184 defined in the handle link 60 and through slots 180 defined in the guide track link 76. The slots 180 allow longitudinal movement of the handle link 60 relative to the guide track link 76, but prevent relative rotation.

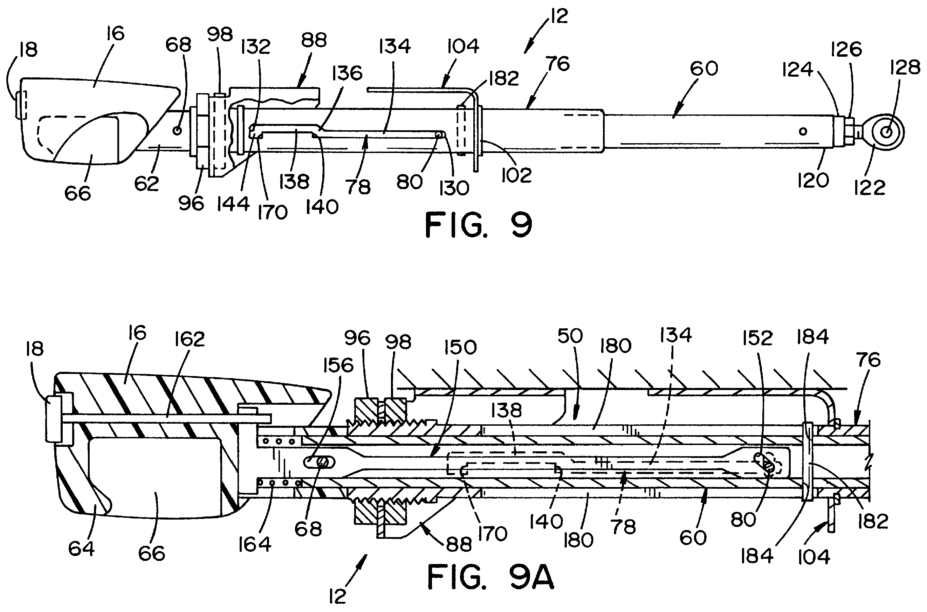

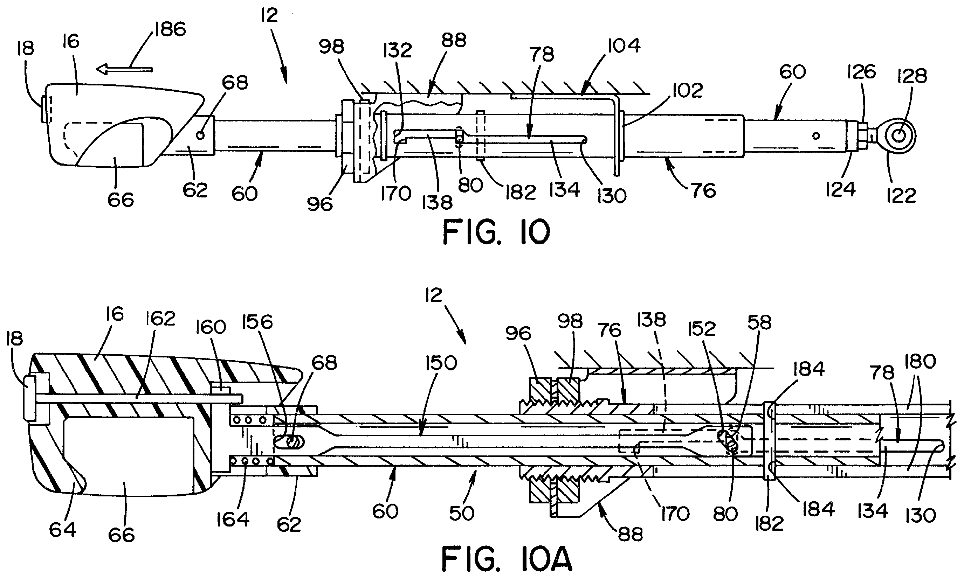

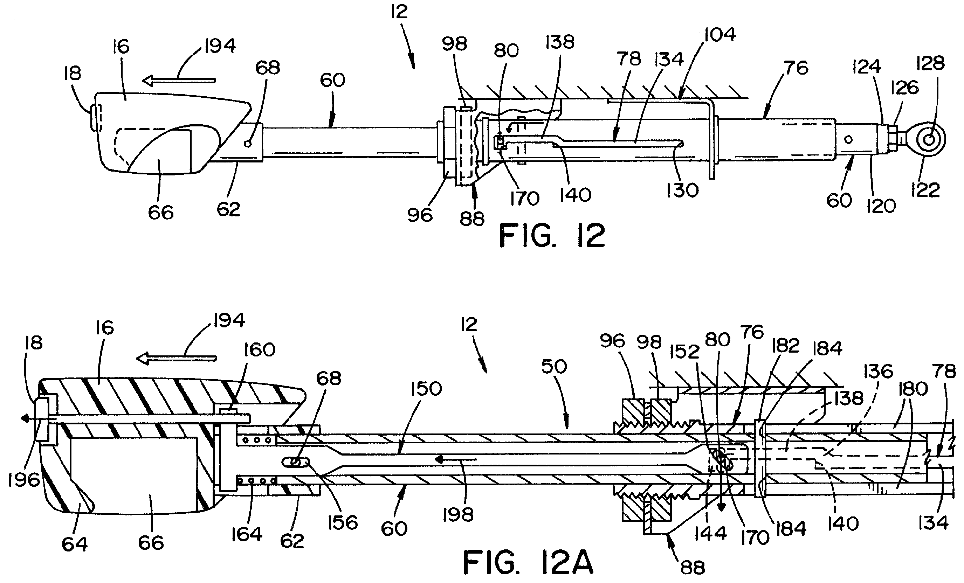

With reference now to FIGS. 9-13A, operation of the brake handle assembly 12 will now be described. As shown in FIGS. 9 and 9A, the handle 16 is in its non-actuated position wherein the brakes are disengaged. Also, the button actuator 18 is in its non-actuated position in FIGS. 9 and 9A. As already mentioned, the handle 16 is freely movable from the illustrated non-actuated position to the intermediate stop position shown in FIGS. 10 and 10A, wherein during movement between the non-actuated position of FIGS. 9 and 9A and the intermediate stop position of FIGS. 10 and 10A, the handle 16 operates the brake valve 20 to apply a modulated braking force in an emergency brake state. Movement of the handle 16 from the intermediate stop position of FIGS. 10 and 10A to the full actuated position shown in FIGS. 12 and 12A is obstructed to prevent operation of the brake in the parking brake state.

More particularly, the pin 80 is freely movable along the guide track 78, and particularly within the first longitudinal section 134 thereof, from the nonactuated position of FIGS. 9 and 9A to the intermediate stop position shown in FIGS. 10 and 10A. At the intermediate stop position, the shoulder 140 prevents further free movement of the pin 80 along the guide tracks 78 toward the full actuated position of FIGS. 12 and 12A. In particular, the obstructing assembly 50 comprising the pin 80, the guide track 78, the angled slot 152 and the lateral slots 58 obstructs movement of the pin 80 along the guide track 78 and into the second longitudinal section 138 to thereby prevent further longitudinal movement of the handle 16 (i.e. in the direction of arrow 186 of FIG. 10). In particular, the shoulder 140 prevents movement of the pin 80 in the direction of the arrow 186, whereas the angled slot 152 and the lateral slots 58 prevent lateral movement of the pin 80 from the first longitudinal section 134 to the second longitudinal section 138.

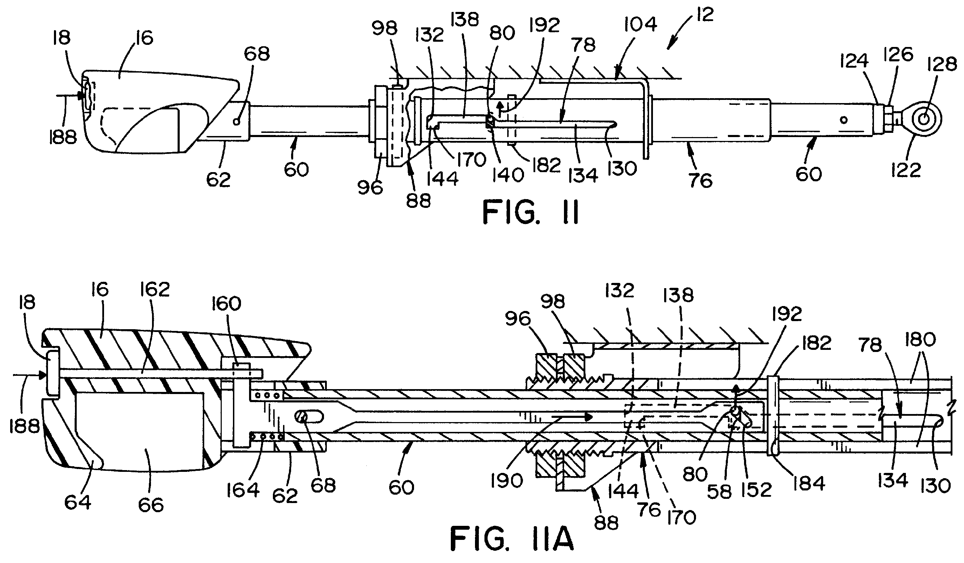

To disengage the obstructing assembly 50, the button actuator 18 is depressed as indicated by arrow 188 in FIGS. 11 and 11A. Movement of the button actuator is transferred to longitudinal movement of the button link 150 by the shaft 162 of the button actuator 18 and its connection to the button link 150. Movement of the button link 150 as indicated by arrow 190 causes the angled slot 152 to move in the same direction as the arrow 190, which in turn laterally moves the pin 80 along the lateral slot 58 as indicated by the arrow 192. This laterally shifts the pin 80 from the first longitudinal section 134 to the second longitudinal section 138. Once in the second longitudinal section, the handle 16 can again be pulled as indicated by the arrow 194 illustrated in FIGS. 12 and 12A such that the handle 16 can be moved from the intermediate stop position to the full actuated position. As shown, the pin 80 moves along the second longitudinal section 138 during such further movement of the handle.

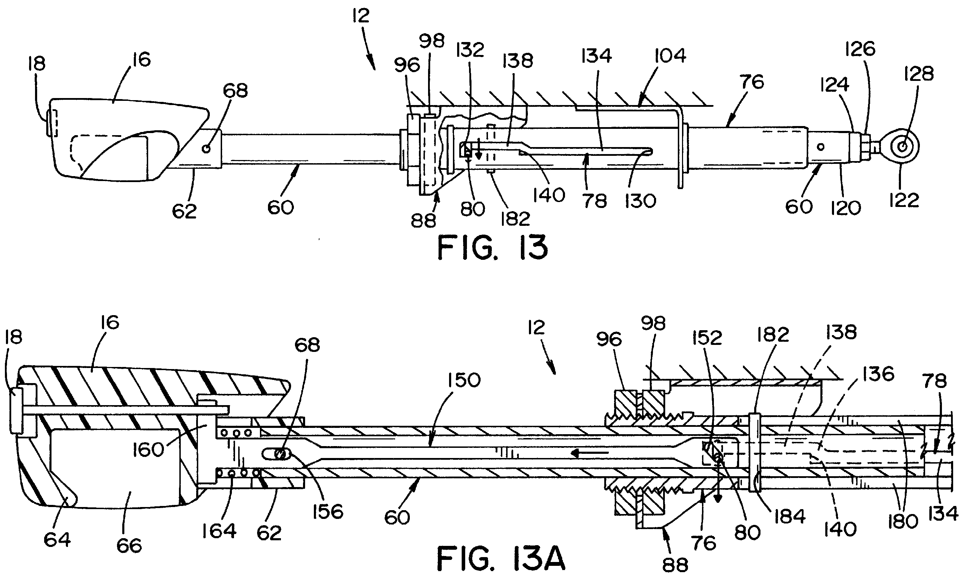

The button actuator 18 can be released as indicated by arrow 196, which via the spring 164 returns the button actuator 18 to its non-depressed or non-actuated position. This also moves the button link 150 as indicated by the arrow 198, which causes the pin 80 to again move laterally, this time into the locking recess section 144 of the guide track 78 whereby the handle 16 is locked in the full actuated position (i.e., parking brake mode). In particular, the angled slot 152 cooperates with the lateral slot 58 to laterally move the pin 80 from the second longitudinal section 138 into the locking recess section 144. This is best illustrated in FIGS. 13 and 13A.

To release the parking brake, with the pin 80 locked in the locking recess section 144, the button actuator 18 is depressed to move the button link 150 which, via the angled slot 152, laterally moves the pin 80 along the lateral slot 58 back into the second longitudinal section 138. From here, the pin 80 is freely movable along the guide tracks 78 to the intermediate stop position and back to the non-actuated position. The tapered portion 142 facilitates lateral transfer of the pin 80 from the second longitudinal section 138 back to the first longitudinal section 134 (i.e., the pin 80 is freely movable from the full actuated position in the second longitudinal section back into the first longitudinal section, past the intermediate stop position, all the way to the non-actuated position).

It will be appreciated that various of the above-disclosed and other features and functions, or alternatives or varieties thereof, may be desirably combined into many other different systems or applications. Also that various presently unforeseen or unanticipated alternatives, modifications, variations or improvements therein may be subsequently made by those skilled in the art which are also intended to be encompassed by the following claims.

## Claims

1. A brake handle assembly (12) for an aircraft emergency/parking brake (28), comprising: a handle (16) movable between a nonactuated position wherein the brake (28) is disengaged and a full actuated position wherein the brake is fully engaged in a parking brake state, the handle (16) freely movable from the nonactuated position to an intermediate stop position wherein during movement therebetween the brake (28) applies a modulated braking force in an emergency brake state,
**characterized in that**
the brake handle assembly (12) further comprises a button actuator (18) disposed on the handle (16) and movable relative to the handle (16), wherein movement of the handle (16) from the intermediate stop position to the full actuated position is obstructed to prevent inadvertent operating of the brake (28) in the parking brake state unless the button actuator (18) is depressed.

2. The brake handle assembly of claim 1 wherein movement of the handle (16) from the full actuated position toward the nonactuated position is obstructed unless the button actuator (18) is depressed.

3. The brake handle assembly of claim 1 wherein the handle (16) is mechanically connected to an emergency/parking brake valve (20) so that the position of the handle is mechanically communicated to the valve (20).

4. The brake handle assembly of claim 3 wherein the handle (16) is mechanically connected to the brake valve (20) by a push/pull cable (24) that transmits pushing and pulling action of the handle (16) to the valve (20).

5. The brake handle assembly of claim 4 wherein the handle (16) is further mechanically connected to the brake valve (20) by a pivotal link (22), the pivotal link (22) having one end (22a) connected to the handle (16) for linear movement therewith and a second end (22b) connected to the push/pull cable (24) for linear movement therewith, the pivotal link (22) pivotally connected to a fixed mounting (42) so that pulling movement of the handle (16) is translated to pushing action of the push/pull cable (24) and pushing action of the handle (16) is translated to pulling action of the push/pull (24) cable.

6. The brake handle assembly of claim 1 further including:
a handle link (60) connected to the handle (16), the handle link (60) longitudinally moving with the handle (16) as the handle (16) is moved between the nonactuated position and the fully engaged position and to any position between the nonactuated position and the fully engaged position, including the intermediate stop position.

7. The brake handle assembly of claim 6 further including:
a guide track link (76) mounted to allow relative movement of the handle link (60) therealong as the handle (16) is moved, the guide track link (76) having a guide track (78) defined therein; and
a pin (80) connected to the handle link (60) for longitudinal movement with the handle link (60), the pin (80) received in the guide track.

8. The brake handle assembly of claim 7 wherein the guide track (78) includes a first end (130) corresponding to the nonactuated position and a second end (132) corresponding to the fully actuated position, the guide track (78) further including a first longitudinal section (134) extending longitudinally from the first end (130) to an intermediate location (136) corresponding to the intermediate stop position, and a second longitudinal section (138) extending from the second end (132) to the intermediate location (136), the second longitudinal section (138) offset laterally from the first longitudinal section (134),
the guide track (78) preferably further including a locking recess section (144) at the second end (134) thereof that is laterally offset from the second longitudinal section (138), the pin (80) moving laterally from the second longitudinal section (138) to the locking recess section (144) when at the second end (132) of the guiding track (78) and the button actuator (18) is released.

9. The brake handle assembly of claim 8 wherein the first longitudinal section (134) terminates at a shoulder (140) defined in the guide track link (76) at the intermediate location, the shoulder (140) obstructing longitudinal movement of the pin (80) along the first longitudinal section (134) beyond the intermediate location, and the pin (80) accordingly obstructing movement of the handle (16) beyond the intermediate stop position when the handle (16) is moved between the nonactuated position and the intermediate stop position.

10. The brake handle assembly of claim 9 wherein movement of the pin (80) laterally from the first longitudinal section (134) to the second longitudinal section allows movement of the pin (80) beyond the shoulder (140) from the intermediate location (136) to the second end (132) of the guide track (78), and accordingly allows movement of the handle (16) from the intermediate stop position to the full actuated position.

11. The brake handle assembly of claim 10 further including:
a button link (150) connected to the button actuator (18) for movement therewith, the button link (150) defining an angled slot (152) in which the pin (80) is received, depression of the button actuator (18) when the pin (80) is at the intermediate location (136) in the first longitudinal section (134) moves the pin (80) laterally to the second longitudinal section (138),
the guide track (78) and the angled slot (152) preferably being configured to prevent lateral movement of the pin (80) from the first longitudinal section (134) to the second longitudinal section (138) at the intermediate location (136) until the button actuator (18) is depressed.

## Patentansprüche

1. Bremsgriffanordnung (12) für eine Flugzeug-Notfall-/Feststellbremse (28), umfassend: einen Griff (16), welcher zwischen einer nicht betätigten Position, in welcher die Bremse (28) gelöst ist, und einer vollständig betätigten Position, in welcher die Bremse in einem Feststellbremszustand vollständig aktiviert ist, bewegbar ist, wobei der Griff (16) frei bewegbar ist von der nicht betätigten Position zu einer Zwischenstoppposition, wobei die Bremse (28) während der Bewegung dazwischen eine modulierte Bremskraft in einem Notfallbremszustand ausübt,
**dadurch gekennzeichnet, dass**
die Bremsgriffanordnung (12) ferner einen Betätigungsknopf (18) umfasst, welcher an dem Griff (16) angeordnet und relativ zu dem Griff (16) bewegbar ist, wobei eine Bewegung von dem Griff (16) von der Zwischenstoppposition zu der vollständig betätigten Position blockiert ist, um eine versehentliche Betätigung von der Bremse (28) in dem Feststellbremszustand zu vermeiden, es sei denn, der Betätigungsknopf (18) wird niedergedrückt.

2. Bremsgriffanordnung von Anspruch 1, wobei eine Bewegung von dem Griff (16) von der vollständig betätigten Position zu der nicht betätigten Position hin blockiert ist, sofern nicht der Betätigungsknopf (18) niedergedrückt wird.

3. Bremsgriffanordnung von Anspruch 1, wobei der Griff (16) mechanisch mit einem Notfall-/Feststellbremsventil (20) verbunden ist, so dass die Position von dem Griff mechanisch mit dem Ventil (20) verbunden ist.

4. Bremsgriffanordnung von Anspruch 3, wobei der Griff (16) mechanisch mit dem Bremsventil (20) durch ein Druck-/Zug-Kabel (24) verbunden ist, welches einen Drück- und Ziehvorgang von dem Griff (16) zu dem Ventil (20) überträgt.

5. Bremsgriffanordnung von Anspruch 4, wobei der Griff (16) ferner mechanisch mit dem Bremsventil (20) durch eine Schwenkverbindung (22) verbunden ist, wobei die Schwenkverbindung (22) ein Ende (22a) hat, welches mit dem Griff (16) für eine lineare Bewegung mit diesem verbunden ist, und ein zweites Ende (22b) hat, welches mit dem Druck-/Zug-Kabel (24) für eine lineare Bewegung mit diesem verbunden ist, wobei die Schwenkverbindung (22) schwenkbar mit einer festgelegten Halterung (42) verbunden ist, so dass eine Ziehbewegung von dem Griff (16) in einen Drückvorgang von dem Druck-/Zug-Kabel (24) umgewandelt wird, und dass ein Drückvorgang von dem Griff (16) in einen Ziehvorgang von dem Druck-/Zug-Kabel (24) umgewandelt wird.

6. Bremsgriffanordnung von Anspruch 1, ferner umfassend:
eine Griffverbindung (60), welche mit dem Griff (16) verbunden ist, wobei sich die Griffverbindung (60) in Längsrichtung mit dem Griff (16) bewegt, wenn der Griff (16) zwischen der nicht betätigten Position und der vollständig aktivierten Position und zu irgendeiner Position zwischen der nicht betätigten Position und der vollständig aktivierten Position einschließlich der Zwischenstoppposition bewegt wird.

7. Bremsgriffanordnung von Anspruch 6, ferner umfassend:
eine Führungsbahnverbindung (76), welche angebracht ist, um eine Relativbewegung von der Griffverbindung (60) entlang dieser zu ermöglichen, wenn der Griff (16) bewegt wird, wobei die Führungsbahnverbindung (76) eine darin definierte Führungsbahn (78) hat; und
einen Stift (80), welcher mit der Griffverbindung (60) für eine Längsbewegung mit der Griffverbindung (60) verbunden ist, wobei der Stift (80) in der Führungsbahn aufgenommen ist.

8. Bremsgriffanordnung von Anspruch 7, wobei die Führungsbahn (78) ein erstes Ende (130) umfasst, welches der nicht betätigten Position entspricht, und ein zweites Ende (132) umfasst, welches der vollständig betätigten Position entspricht, wobei die Führungsbahn (78) ferner einen ersten Längsabschnitt (134) umfasst, welcher sich in Längsrichtung von dem ersten Ende (130) zu einer Zwischenposition (136), welche der Zwischenstoppposition entspricht, erstreckt, und einen zweiten Längsabschnitt (138) umfasst, welcher sich von dem zweiten Ende (132) zu der Zwischenposition (136) erstreckt, wobei der zweite Längsabschnitt (138) von dem ersten Längsabschnitt (134) seitlich versetzt ist,
wobei die Führungsbahn (78) vorzugsweise ferner einen Verriegelungsausnehmungsabschnitt (144) an dem zweiten Ende (134) davon umfasst, welcher von dem zweiten Längsabschnitt (138) seitlich versetzt ist, wobei sich der Stift (80) seitlich von dem zweiten Längsabschnitt (138) zu dem Verriegelungsausnehmungsabschnitt (144) bewegt, wenn er sich an dem zweiten Ende (132) von der Führungsbahn (78) befindet und der Betätigungsknopf (18) freigegeben wird.

9. Bremsgriffanordnung von Anspruch 8, wobei der erste Längsabschnitt (134) an einer Schulter (140) endet, welche in der Führungsbahn-Verbindung (76) an der Zwischenposition definiert ist, wobei die Schulter (140) eine Längsbewegung von dem Stift (80) entlang des ersten Längsabschnitts (134) über die Zwischenposition hinaus blockiert und der Stift (80) entsprechend eine Bewegung von dem Griff (16) über die Zwischenstoppposition hinaus blockiert, wenn der Griff (16) zwischen der nicht betätigten Position und der Zwischenstoppposition bewegt wird.

10. Bremsgriffanordnung von Anspruch 9, wobei eine Bewegung von dem Stift (80) seitlich von dem ersten Längsabschnitt (134) zu dem zweiten Längsabschnitt eine Bewegung von dem Stift (80) über die Schulter (140) hinaus von der Zwischenposition (136) zu dem zweiten Ende (132) von der Führungsbahn (78) ermöglicht und folglich eine Bewegung von dem Griff (16) von der Zwischenstoppposition zu der vollständig betätigten Position erlaubt.

11. Bremsgriffanordnung von Anspruch 10, ferner umfassend:
eine Knopfverbindung (150), welche mit dem Betätigungsknopf (18) für eine Bewegung mit diesem verbunden ist, wobei die Knopfverbindung (150) einen winkeligen Schlitz (152) definiert, in welchem der Stift (80) aufgenommen ist, wobei ein Niederdrücken von dem Betätigungsknopf (18), wenn sich der Stift (80) an der Zwischenposition (136) in dem ersten Längsabschnitt (134) befindet, den Stift (80) seitlich zu dem zweiten Längsabschnitt (138) bewegt,
wobei die Führungsbahn (78) und der winkelige Schlitz (152) vorzugsweise dazu konfiguriert sind, eine seitliche Bewegung von dem Stift (80) von dem ersten Längsabschnitt (134) zu dem zweiten Längsabschnitt (138) an der Zwischenposition (136) zu verhindern, bis der Betätigungsknopf (18) niedergedrückt wird.

## Revendications

1. Ensemble de manette de frein (12) pour un frein de stationnement et de secours d'aéronef (28) comprenant : une manette (16) mobile entre une position non actionnée, dans laquelle le frein (28) est désengagé et une position entièrement actionnée, dans laquelle le frein est complètement engagé dans un état de frein de stationnement, la manette (16) étant librement mobile de la position non actionnée à une position d'arrêt intermédiaire, dans laquelle pendant le mouvement entre eux, le frein (28) applique une force de freinage modulée dans un état de frein de secours,
**caractérisé en ce que**
l'ensemble de manette de frein (12) comprend en outre un actionneur à bouton (18) agencé sur la manette (16) et mobile par rapport à la manette (16), dans lequel le mouvement de la manette (16) de la position d'arrêt intermédiaire à la position entièrement actionnée est entravé pour empêcher le fonctionnement involontaire du frein (28) dans l'état de frein de stationnement à moins que l'actionneur à bouton (18) ne soit enfoncé.

2. Ensemble de manette de frein selon la revendication 1, dans lequel le mouvement de la manette (16) de la position entièrement actionnée vers la position non actionnée est entravé à moins que l'actionneur à bouton (18) ne soit enfoncé.

3. Ensemble de manette de frein selon la revendication 1, dans lequel la manette (16) est mécaniquement reliée à une valve de frein de stationnement et de secours (20) de sorte que la position de la manette soit mécaniquement communiquée à la valve (20).

4. Ensemble de manette de frein selon la revendication 3, dans lequel la manette (16) est mécaniquement reliée à la valve de frein (20) par un câble de poussée et de traction (24) qui transmet l'action de poussée et de traction de la manette (16) à la valve (20).

5. Ensemble de manette de frein selon la revendication 4, dans lequel la manette (16) est en outre reliée mécaniquement à la valve de frein (20) par une bielle pivotante (22), la bielle pivotante (22) présentant une extrémité (22a) reliée à la manette (16) pour un mouvement linéaire avec elle et une seconde extrémité (22b) reliée au câble de poussée et de traction (24) pour un mouvement linéaire avec lui, la bielle pivotante (22) étant reliée de manière à pouvoir pivoter à un support fixe (42) de sorte que le mouvement de traction de la manette (16) soit transformé en action de poussée du câble de poussée et de traction (24) et l'action de poussée de la manette (16) soit transformée en action de traction du câble de poussée et traction (24).

6. Ensemble de manette de frein selon la revendication 1, incluant en outre :
une bielle de manette (60) reliée à la manette (16), la bielle de manette (60) se déplaçant longitudinalement avec la manette (16) lorsque la manette (16) est déplacée entre la position non actionnée et la position entièrement engagée et dans n'importe quelle position entre la position non actionnée et la position entièrement engagée, incluant la position d'arrêt intermédiaire.

7. Ensemble de manette de frein selon la revendication 6, incluant en outre :
une bielle de voie de guidage (76) montée pour permettre le mouvement relatif de la bielle de manette (60) le long de celle-ci lorsque la manette (16) est déplacée, la bielle de voie de guidage (76) présentant une voie de guidage (78) définie dedans ; et
une broche (80) reliée à la bielle de manette (60) pour un mouvement longitudinal avec la bielle de manette (60), la broche (80) étant reçue dans la voie de guidage.

8. Ensemble de manette de frein selon la revendication 7, dans lequel la voie de guidage (78) inclut une première extrémité (130) correspondant à la position non actionnée, et une seconde extrémité (132) correspondant à la position entièrement actionnée, la voie de guidage (78) incluant en outre une première section longitudinale (134) s'étendant longitudinalement de la première extrémité (130) à un endroit intermédiaire (136) correspondant à la position d'arrêt intermédiaire, et une seconde section longitudinale (138) s'étendant de la seconde extrémité (132) à l'endroit intermédiaire (136), la seconde section longitudinale (138) étant décalée latéralement de la première section longitudinale (134),
la voie de guidage (78) incluant en outre de préférence une section d'évidement de verrouillage (144) sur la seconde extrémité (134) de celle-ci qui est latéralement décalée de la seconde section longitudinale (138), la broche (80) se déplaçant latéralement de la seconde section longitudinale (138) vers la section d'évidement de verrouillage (144) lorsqu'elle est sur la seconde extrémité (132) de la voie de guidage (78) et l'actionneur bouton (18) est libéré.

9. Ensemble de manette de frein selon la revendication 8, dans lequel la première section longitudinale (134) se termine sur un épaulement (140) défini dans la bielle de voie de guidage (76) sur l'endroit intermédiaire, l'épaulement (140) entravant le mouvement longitudinal de la broche (80) le long de la première section longitudinale (134) au-delà de l'endroit intermédiaire, et la broche (80) entravant par conséquent le mouvement de la manette (16) au-delà de la position d'arrêt intermédiaire lorsque la manette (16) est déplacée entre la position non actionnée et la position d'arrêt intermédiaire.

10. Ensemble de manette de frein selon la revendication 9, dans lequel le mouvement de la broche (80) latéralement de la première section longitudinale (134) à la seconde section longitudinale permet le mouvement de la broche (80) au-delà de l'épaulement (140) de l'endroit intermédiaire (136) à la seconde extrémité (132) de la voie de guidage (78) et permet par conséquent le mouvement de la manette (16) de la position d'arrêt intermédiaire à la position entièrement actionnée.

11. Ensemble de manette de frein selon la revendication 10, incluant en outre :
une bielle de bouton (150) reliée à l'actionneur à bouton (18) pour un mouvement avec lui, la bielle de bouton (150) définissant une fente anglée (152), dans laquelle la broche (80) est reçue, l'enfoncement de l'actionneur à bouton (18), lorsque la broche (80) est sur l'endroit intermédiaire (136) dans la première section longitudinale (134), déplace la broche (80) latéralement vers la seconde section longitudinale (138),
la voie de guidage (78) et la fente anglée (152) étant de préférence configurées pour empêcher le mouvement latéral de la broche (80) de la première section longitudinale (134) à la seconde section longitudinale (138) à l'endroit intermédiaire (136) jusqu'à ce que l'actionneur bouton (18) soit enfoncé.
